# EUROPEAN PATENT APPLICATION

(11) **EP 4 686 005 A1**
(43) Date of publication of application: **28.01.2026**
(21) Application number: 23928738.6
(22) Date of filing: 11.10.2023
(51) Int. Cl.: H01R 4/68, H01F 6/06, H01B 12/06

(54) **PROTECTIVE CASE FOR SUPERCONDUCTING CONNECTION PART AND PROTECTIVE STRUCTURE FOR SUPERCONDUCTING CONNECTION PART**

(30) Priority: 22.03.2023 JP 2023045110
(71) Applicant: Sumitomo Electric Industries, Ltd., Osaka-shi, Osaka 541-0041 (JP)
(72) Inventor: OHKI, Kotaro, Osaka-shi, Osaka 541-0041 (JP)
(74) Representative: Grünecker Patent- und Rechtsanwälte PartG mbB
(86) International application number: PCT/JP2023/036898
(87) International publication number: WO 2024/195165

(57) **Abstract**

This protective case for a superconducting connection part comprises a protective case body including an outer peripheral surface around which a first extra length portion of a superconducting wire material is wound. The outer peripheral surface of the protective case body is provided with: a blind hole for housing the superconducting connection part of the superconducting wire material; and a second extra length portion of the superconducting wire material which is connected to the first extra length portion and the superconducting connection part.

## Description

### TECHNICAL FIELD

The present disclosure relates to a protective case for a superconducting joint portion and a protective structure for a superconducting joint portion. This application claims priority based on Japanese Patent Application No. 2023-045110 filed on March 22, 2023. The entire contents of the Japanese patent application are incorporated herein by reference.

### BACKGROUND ART

Patent literature 1 listed below discloses a superconducting coil device including a superconducting coil. The superconducting coil includes a superconducting wire and a joint portion of the superconducting wire.

### CITATION LIST

### PATENT LITERATURE

Patent literature 1: WO 2022/137738

### SUMMARY OF INVENTION

A protective case for a superconducting joint portion in the present disclosure includes a protective case body having an outer circumferential surface around which a first excess portion of a superconducting wire is wound. The outer circumferential surface of the protective case body has a blind hole that accommodates a superconducting joint portion of the superconducting wire and a second excess portion of the superconducting wire, the second excess portion being connected to the first excess portion and the superconducting joint portion.

A protective structure for a superconducting joint portion in the present disclosure includes the protective case for a superconducting joint portion in the present disclosure, the superconducting wire including the first excess portion and the second excess portion, and the superconducting joint portion. The first excess portion of the superconducting wire is wound along the outer circumferential surface of the protective case body. The superconducting joint portion of the superconducting wire and the second excess portion of the superconducting wire are accommodated in the blind hole.

### BRIEF DESCRIPTION OF THE DRAWINGS

[FIG. 1] FIG. 1 is a schematic plan view of a protective structure for a superconducting joint portion according to an embodiment.
[FIG. 2] FIG. 2 is a schematic perspective view of a protective case for a superconducting joint portion according to the embodiment.
[FIG. 3] FIG. 3 is a schematic plan view of a base member of the protective case for a superconducting joint portion according to the embodiment.
[FIG. 4] FIG. 4 is a schematic bottom plan view of a cover member of the protective case for a superconducting joint portion according to the embodiment.
[FIG. 5] FIG. 5 is a schematic partial enlarged cross-sectional view of a superconducting joint portion of an example of the embodiment.
[FIG. 6] FIG. 6 is a schematic partial enlarged perspective view of a superconducting joint portion of another example of the embodiment.
[FIG. 7] FIG. 7 is a schematic partial enlarged cross-sectional view of the protective structure for a superconducting joint portion according to the embodiment, taken along a cross-section line VII-VII shown in FIG. 1.
[FIG. 8] FIG. 8 is a schematic partial enlarged cross-sectional view of the protective structure for a superconducting joint portion according to the embodiment, taken along a cross-section line VIII-VIII shown in FIG. 1.
[FIG. 9] FIG. 9 is a schematic partial enlarged cross-sectional view of the protective structure for a superconducting joint portion according to the embodiment, taken along a cross-section line IX-IX shown in FIG. 1.
[FIG. 10] FIG. 10 is a schematic partial enlarged cross-sectional view showing a superconducting wire and an imaginary frame surrounding the superconducting wire.

### DETAILED DESCRIPTION

### [Problems to be Solved by Present Disclosure]

In the superconducting coil device, the temperature of the superconducting wire and the joint portion of the superconducting wire may be raised from a low temperature such as a liquid helium temperature (4.2 K) or a liquid nitrogen temperature (77.3 K) to room temperature for maintenance of the superconducting coil device. Due to this temperature rise, dew condensation water adheres to the joint portion of the superconducting wire, and the joint portion of the superconducting wire may deteriorate.

The joint portion of the superconducting wire is formed by placing a part of the superconducting wire in a furnace and heat-treating the part of the superconducting wire. When the joint portion of the superconducting wire obtained by the heat treatment does not have sufficient performance, the joint portion of the superconducting wire is cut, and the heat treatment of the superconducting wire is performed again to form the joint portion of the superconducting wire again. Thus, in the superconducting coil device, an excess portion of the superconducting wire is generated in order to form the joint portion of the superconducting wire. In addition, it is necessary to compactly process the excess portion of the superconducting wire.

The present disclosure has been made in view of the above problems, and an object thereof is to provide a protective case for a superconducting joint portion and a protective structure for a superconducting joint portion, each of which enables compact processing of an excess portion of a superconducting wire and enables the avoidance of deterioration of a superconducting joint portion of the superconducting wire.

### [Advantageous Effect of the Present Disclosure]

According to the present disclosure, it is possible to compactly process an excess portion of a superconducting wire and avoid deterioration of a superconducting joint portion of the superconducting wire.

### [Description of Embodiments]

First, embodiments of the present disclosure will be listed and described.
(1) A protective case 2 for a superconducting joint portion according to the present disclosure includes a protective case body 8 having an outer circumferential surface 10 around which a first excess portion 6a of superconducting wire 3, 4 is to be wound. The outer circumferential surface 10 of the protective case body 8 has a blind hole 16 that accommodates a superconducting joint portion 6c of the superconducting wire 3, 4 and a second excess portion 6b of the superconducting wire 3, 4, the second excess portion 6b being connected to the first excess portion 6a and the superconducting joint portion 6c.

The first excess portion 6a of the superconducting wire 3, 4 is wound around the outer circumferential surface 10 of the protective case body 8, and the second excess portion 6b of the superconducting wire 3, 4 is accommodated in the blind hole 16 of the protective case body 8. Thus, according to the protective case 2 for a superconducting joint portion, the excess portion of the superconducting wire 3, 4 can be processed compactly. The superconducting joint portion 6c of the superconducting wire 3, 4 is accommodated in the blind hole 16 of the protective case body 8. Thus, even when the superconducting wire 3, 4 and the superconducting joint portion 6c of the superconducting wire 3, 4 are subjected to a heat cycle including a temperature rise from a low temperature such as a liquid helium temperature (4.2 K) or a liquid nitrogen temperature (77.3 K) to room temperature, the dew condensation water is less likely to adhere to the superconducting joint portion 6c of the superconducting wire 3, 4. According to the protective case 2 for a superconducting joint portion, the deterioration of the superconducting joint portion 6c of the superconducting wire 3, 4 can be avoided.

(2) According to the protective case 2 for a superconducting joint portion according to the above (1), the blind hole 16 may include a first hole portion 17 and a second hole portion 18, the first hole portion 17 being connected to the outer circumferential surface 10 of the protective case body 8, the first hole portion 17 accommodating the second excess portion 6b of the superconducting wire 3, 4, the second hole portion 18 being connected to the first hole portion 17, the second hole portion 18 defining a bottom of the blind hole 16, the second hole portion 18 accommodating the superconducting joint portion 6c of the superconducting wire 3, 4. The first hole portion 17 may have a curved shape.

When the second excess portion 6b of the superconducting wire 3, 4 is inserted into the blind hole 16, the stress applied to the second excess portion 6b of the superconducting wire 3, 4 is reduced. Even when the second excess portion 6b of the superconducting wire 3, 4 is subjected to the heat cycle described above while being accommodated in the first hole portion 17, the stress applied to the second excess portion 6b of the superconducting wire 3, 4 due to the heat cycle is reduced. Thus, the deterioration and breakage of the second excess portion 6b of the superconducting wire 3, 4 can be avoided.

(3) According to the protective case 2 for a superconducting joint portion according to the above (2), the second hole portion 18 may have a straight shape.

Even when the superconducting joint portion 6c of the superconducting wire 3, 4 is subjected to the heat cycle described above while being accommodated in the second hole portion 18, the stress applied to the superconducting joint portion 6c of the superconducting wire 3, 4 due to the heat cycle is reduced. Thus, the deterioration of the superconducting joint portion 6c of the superconducting wire 3, 4 can be avoided.

(4) According to the protective case 2 for a superconducting joint portion according to the above (2) or (3), the outer circumferential surface 10 of the protective case body 8 may include a curved surface having a protruding shape in a plan view in a transverse direction of the outer circumferential surface 10. A radius of curvature R2 of the curved surface may be larger than a radius of curvature R1 of the first hole portion 17.

When the first excess portion 6a of the superconducting wire 3, 4 is wound around the outer circumferential surface 10 of the protective case body 8, the stress applied to the first excess portion 6a of the superconducting wire 3, 4 is reduced. Even when the first excess portion 6a of the superconducting wire 3, 4 is subjected to the heat cycle described above while being wound around the outer circumferential surface 10 of the protective case body 8, the stress applied to the first excess portion 6a of the superconducting wire 3, 4 due to the heat cycle is reduced. Thus, the deterioration and breakage of the first excess portion 6a of the superconducting wire 3, 4 can be avoided.

(5) According to the protective case 2 for a superconducting joint portion according to any one of the above (2) to (4), a radius of curvature R1 of the first hole portion 17 may be 15 mm or more.

When the second excess portion 6b of the superconducting wire 3, 4 is inserted into the first hole portion 17, stress applied to the second excess portion 6b of the superconducting wire 3, 4 is reduced. Even when the second excess portion 6b of the superconducting wire 3, 4 is subjected to the heat cycle described above while being accommodated in the first hole portion 17, the stress applied to the second excess portion 6b of the superconducting wire 3, 4 due to the heat cycle is reduced. Thus, the deterioration and breakage of the second excess portion 6b of the superconducting wire 3, 4 can be avoided.

(6) The protective case 2 for a superconducting joint portion according to any one of the above (2) to (5), in a plan view in a transverse direction of the outer circumferential surface 10 of the protective case body 8, the protective case body 8 may have an oval shape, the first hole portion 17 may be provided in a portion of the outer circumferential surface 10 located in a transverse direction of the protective case body 8 with respect to a center 8c of the protective case body 8, and the second hole portion 18 may extend in the transverse direction of the protective case body 8 and may be displaced in a longitudinal direction of the protective case body 8 with respect to the center 8c of the protective case body 8.

While the size of the protective case body 8 is reduced, the stress applied to the first excess portion 6a and the second excess portion 6b of the superconducting wire 3, 4 can be reduced. The size of the protective case 2 for a superconducting joint portion can be reduced, and the deterioration and breakage of the first excess portion 6a and the second excess portion 6b of the superconducting wire 3, 4 can be avoided.

(7) According to the protective case 2 for a superconducting joint portion according to any one of the above (1) to (6), the protective case body 8 may include a base member 20 and a cover member 25. The base member 20 may have a first groove 23 constituting at least part of the blind hole 16. The cover member 25 may be attached to the base member 20 to cover the first groove 23.

The second excess portion 6b of the superconducting wire 3, 4 and the superconducting joint portion 6c of the superconducting wire 3, 4 can be easily accommodated in the blind hole 16.

(8) According to the protective case 2 for a superconducting joint portion according to the above (7), the cover member 25 may have a second groove 28. The first groove 23 and the second groove 28 may constitute the blind hole 16.

The second excess portion 6b of the superconducting wire 3, 4 and the superconducting joint portion 6c of the superconducting wire 3, 4 can be easily accommodated in the blind hole 16.

(9) The protective case 2 for a superconducting joint portion according to the above (7) or (8) may further include a fixation member 9. The cover member 25 may be fixed to the base member 20 by the fixation member 9.

The second excess portion 6b of the superconducting wire 3, 4 and the superconducting joint portion 6c of the superconducting wire 3, 4 can be easily accommodated in the blind hole 16.

(10) According to the protective case 2 for a superconducting joint portion according to any one of the above (1) to (9), the protective case body 8 may be made of Hastelloy.

Even when the protective case body 8 is subjected to the heat cycle described above, the protective case body 8 is less likely to deteriorate. In addition, the mechanical strength of the protective case body 8 is improved. According to the protective case 2 for a superconducting joint portion, the deterioration of the first excess portion 6a and the second excess portion 6b of the superconducting wire 3, 4 and the deterioration of the superconducting joint portion 6c of the superconducting wire 3, 4 can be avoided.

(11) A protective structure 1 for a superconducting joint portion according to the present disclosure includes the protective case 2 for a superconducting joint portion according to any one of the above (1) to (10), the superconducting wire 3, 4 including the first excess portion 6a and the second excess portion 6b, and the superconducting joint portion 6c of the superconducting wire 3, 4. The first excess portion 6a of the superconducting wire 3, 4 is wound along the outer circumferential surface 10 of the protective case body 8. The superconducting joint portion 6c of the superconducting wire 3, 4 and the second excess portion 6b of the superconducting wire 3, 4 are accommodated in the blind hole 16.

The protective structure 1 for a superconducting joint portion includes a protective case 2 for a superconducting joint portion. Thus, according to the protective structure 1 for a superconducting joint portion, it is possible to compactly process the excess portion of the superconducting wire 3, 4 and avoid deterioration of the superconducting joint portion 6c of the superconducting wire 3, 4.

(12) According to the protective structure 1 for a superconducting joint portion according to the above (11), in a cross-section perpendicular to a longitudinal direction of the blind hole 16, a gap g between a side wall of the blind hole 16 and the second excess portion 6b of the superconducting wire 3, 4 may be 2 mm or less.

Since the gap g is small, the dew condensation water caused by the heat cycle described above is less likely to reach the superconducting joint portion 6c of the superconducting wire 3, 4, and is less likely to adhere to the superconducting joint portion 6c of the superconducting wire 3, 4. According to the protective structure 1 for a superconducting joint portion, the deterioration of the superconducting joint portion 6c of the superconducting wire 3, 4 can be avoided.

(13) According to the protective structure 1 for a superconducting joint portion according to the above (11), an area of an opening 16a of the blind hole 16 in the outer circumferential surface 10 of the protective case body 8 may be less than or equal to a sum of a cross-sectional area S1 of the superconducting wire 3, 4 in a cross-section perpendicular to a longitudinal direction of the superconducting wire 3, 4 and an area S2 of an imaginary frame 19 surrounding the superconducting wire 3, 4 and having a width of 1 mm.

Since the gap between the superconducting wire 3, 4 and the opening 16a of the blind hole 16 is small, the dew condensation water caused by the heat cycle described above is less likely to reach the superconducting joint portion 6c of the superconducting wire 3, 4, and is less likely to adhere to the superconducting joint portion 6c of the superconducting wire 3, 4. According to the protective structure 1 for a superconducting joint portion, the deterioration of the superconducting joint portion 6c of the superconducting wire 3, 4 can be avoided.

(14) The protective structure 1 for a superconducting joint portion according to any one of the above (11) to (13) may further include a sealing member 7 that closes at least part of a gap between the second excess portion 6b of the superconducting wire 3, 4 and a side wall of the blind hole 16 or a gap between the superconducting joint portion 6c of the superconducting wire 3, 4 and the side wall of the blind hole 16.

The sealing member 7 prevents the dew condensation water caused by the heat cycle described above from entering the superconducting joint portion 6c. According to the protective structure 1 for a superconducting joint portion, the deterioration of the superconducting joint portion 6c of the superconducting wire 3, 4 can be avoided.

### [Detailed Description of Embodiments]

Embodiments of the present disclosure will be described below with reference to the drawings. In the drawings, the same or corresponding components are denoted by the same reference numerals, and the description thereof will not be repeated.

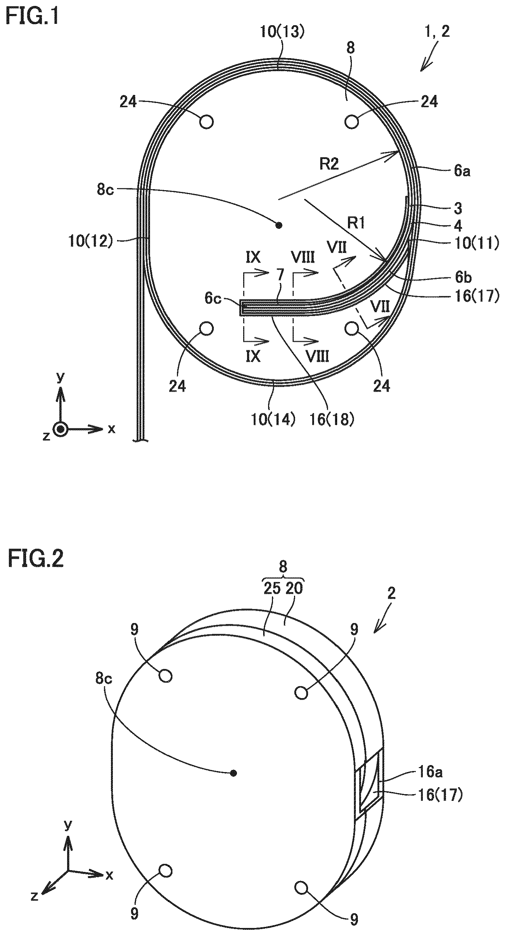

Referring to FIG. 1, a protective structure 1 for a superconducting joint portion in an embodiment of the present disclosure includes a protective case 2 for a superconducting joint portion in the embodiment of the present disclosure, superconducting wires 3, 4, and a superconducting joint portion 6c of the superconducting wires 3, 4. The protective structure 1 for a superconducting joint portion may further include a sealing member 7. For the sake of simplicity, in FIG. 1, a cover member 25 is omitted. In addition, FIG. 1 shows a state in which a first excess portion 6a is wound one or more times around an outer circumferential surface 10 of the protective case 2. The number of times of winding the first excess portion 6a on the outer circumferential surface 10 varies depending on the length of the first excess portion 6a.

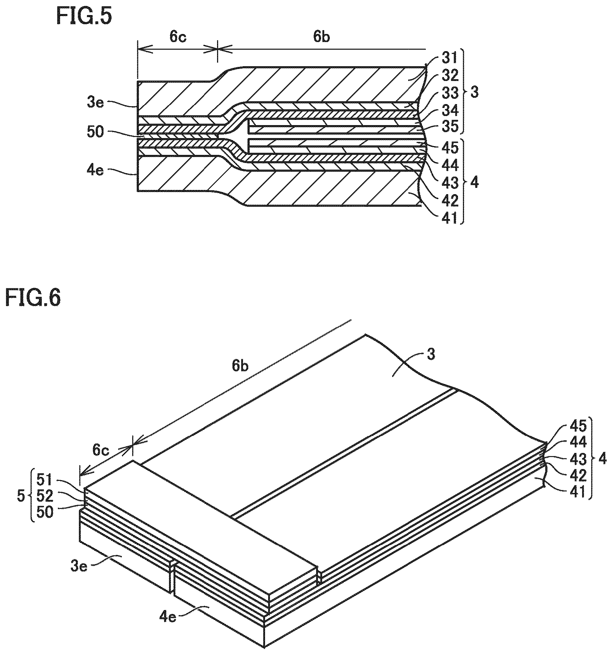

The protective case 2 for a superconducting joint portion protects the superconducting joint portion 6c of the superconducting wires 3, 4. In the superconducting joint portion 6c of the superconducting wires 3, 4, superconducting layers 33 and 43 (see FIGS. 5 and 6) of the superconducting wires 3, 4 are superconducting-joined to each other. The superconducting joint portion 6c of the superconducting wires 3, 4 is formed by placing parts of the superconducting wires 3, 4 into a heating furnace and heat-treating the parts of the superconducting wires 3, 4. Further, when the superconducting joint portion 6c of the superconducting wires 3, 4 obtained by the heat treatment does not have sufficient performance, the superconducting joint portion 6c of the superconducting wire 3, 4 is cut, and the heat treatment of the superconducting wires 3, 4 is performed again to form the superconducting joint portion of the superconducting wire 3, 4 again. Thus, in order to form the superconducting joint portion 6c of the superconducting wire 3, 4, an excess portion of the superconducting wires 3, 4 is generated. The superconducting wires 3, 4 include the first excess portion 6a and a second excess portion 6b as the excess portions of the superconducting wires 3, 4.

Referring to FIGS. 1 to 4 and 7 to 9, the protective case 2 for a superconducting joint portion include a protective case body 8. The protective case 2 for a superconducting joint portion may further include a fixation member 9.

Referring to FIGS. 1 and 2, the protective case body 8 includes the outer circumferential surface 10 around which the first excess portion 6a of the superconducting wire 3, 4 is wound. The outer circumferential surface 10 is, for example, a side surface of the protective case body 8. In a plan view in a transverse direction (a thickness direction of the protective case body 8, the z direction) of the outer circumferential surface 10 of the protective case body 8, the protective case body 8 has, for example, an oval shape, an elliptical shape, or a hamburger steak shape. The transverse direction of the outer circumferential surface 10 is a direction perpendicular to a circumferential direction of the outer circumferential surface 10 and a normal line of the outer circumferential surface 10. The outer circumferential surface 10 includes a first flat surface 11, a second flat surface 12, a first curved surface 13, and a second curved surface 14.

The second flat surface 12 faces the first flat surface 11 in a transverse direction (x direction) of the protective case body 8 in the plan view in the transverse direction (z direction) of the outer circumferential surface 10 of the protective case body 8. In the plan view in the transverse direction (z direction) of the outer circumferential surface 10 of the protective case body 8, each of the first flat surface 11 and the second flat surface 12 is a portion of the outer circumferential surface 10 of the protective case body 8 located in the transverse direction (x direction) of the protective case body 8, with respect to the center 8c of the protective case body 8. The center 8c of the protective case body 8 is an intersection point of the center line of the protective case body 8 in the transverse direction and the center line of the protective case body 8 in a longitudinal direction (y direction).

The first curved surface 13 and the second curved surface 14 connect the first flat surface 11 and the second flat surface 12, respectively. In the plan view in the transverse direction (z direction) of the outer circumferential surface 10 of the protective case body 8, the first curved surface 13 and the second curved surface 14 have protruding shapes from the first flat surface 11 and the second flat surface 12, respectively. For example, the first curved surface 13 and the second curved surface 14 each have a semicircular arc shape. A radius of curvature R2 of each of the first curved surface 13 and the second curved surface 14 is, for example, 25 mm or more. The radius of curvature R2 of each of the first curved surface 13 and the second curved surface 14 is larger than a radius of curvature R1 of a first hole portion 17. The radius of curvature R2 of each of the first curved surface 13 and the second curved surface 14 is, for example, 1.2 or more times the radius of curvature R1 of the first hole portion 17.

The second curved surface 14 faces the first curved surface 13 in the longitudinal direction (y direction) of the protective case body 8 in the plan view in the transverse direction (z direction) of the outer circumferential surface 10 of the protective case body 8. In the plan view in the transverse direction (z direction) of the outer circumferential surface 10 of the protective case body 8, each of the first curved surface 13 and the second curved surface 14 is a portion of the outer circumferential surface 10 of the protective case body 8 located in the longitudinal direction (y direction) of the protective case body 8 with respect to the center 8c of the protective case body 8. In the plan view in the transverse direction of the outer circumferential surface 10 of the protective case body 8, the maximum distance between the first curved surface 13 and the second curved surface 14 is larger than the maximum distance between the first flat surface 11 and the second flat surface 12.

Referring to FIGS. 1 and 2, a blind hole 16 is provided in the outer circumferential surface 10 of the protective case body 8. The blind hole 16 is provided, for example, in a portion of the outer circumferential surface 10 of the protective case body 8 located in the transverse direction (x direction) of the protective case body 8 with respect to the center 8c of the protective case body 8. Specifically, the blind hole 16 is provided in the first flat surface 11. In the plan view in the transverse direction (z direction) of the outer circumferential surface 10 of the protective case body 8, the first flat surface 11 extends along a tangential direction (y direction) of the blind hole 16 at the connection portion between the blind hole 16 and the outer circumferential surface 10 of the protective case body 8. Thus, the stress applied to the excess portions of the superconducting wires 3, 4 is reduced. Deterioration and breakage of the superconducting wires 3, 4 can be avoided.

The blind hole 16 accommodates the second excess portion 6b of the superconducting wire 3, 4 and the superconducting joint portion 6c of the superconducting wires 3, 4. The second excess portion 6b is connected to the first excess portion 6a and the superconducting joint portion 6c. The blind hole 16 includes the first hole portion 17 and a second hole portion 18.

The first hole portion 17 accommodates the second excess portion 6b of the superconducting wires 3, 4. The first hole portion 17 is connected to the outer circumferential surface 10 of the protective case body 8. The first hole portion 17 is provided in a portion of the outer circumferential surface 10 of the protective case body 8 located in the transverse direction (x direction) of the protective case body 8 with respect to the center 8c of the protective case body 8. Specifically, the first hole portion 17 is provided in the first flat surface 11. In the plan view in the transverse direction (z direction) of the outer circumferential surface 10 of the protective case body 8, the first hole portion 17 has a curved shape. For example, the first hole portion 17 has the shape of a portion of an arc, such as a quarter arc. The radius of curvature R1 of the first hole portion 17 is, for example, 15 mm or more. The radius of curvature R1 of the first hole portion 17 may be 20 mm or more. The radius of curvature R1 of the first hole portion 17 is, for example, 100 mm or less. The radius of curvature R1 of the first hole portion 17 may be 50 mm or less.

The second hole portion 18 accommodates the superconducting joint portion 6c. The second hole portion 18 may further accommodate a part of the second excess portion 6b. The second hole portion 18 is connected to the first hole portion 17. The second hole portion 18 defines a bottom of the blind hole 16. The second hole portion 18 extends, for example, in the transverse direction (x direction) of the protective case body 8. The second hole portion 18 has, for example, a straight shape. The second hole portion 18 is displaced in the longitudinal direction (y direction) of the protective case body 8 with respect to the center 8c of the protective case body 8, for example.

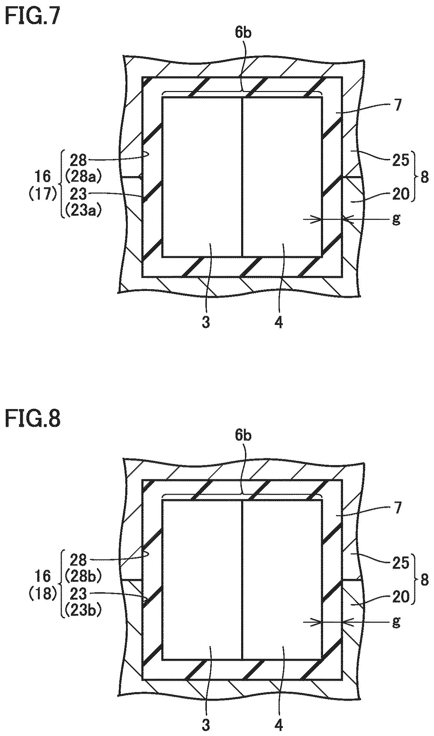

The cross-sectional views of FIGS. 7 to 9 each shows the state in which the cover member 25 is attached to a base member 20. In each of the cross-sectional views of FIGS. 7 to 9, the hatching of the superconducting wires 3, 4 is omitted. Referring to FIGS. 7 to 9, in a cross-section perpendicular to the longitudinal direction of the blind hole 16, a gap g between a side wall of the blind hole 16 and the second excess portion 6b of the superconducting wires 3, 4 is, for example, 2 mm or less. From the viewpoint of preventing the entry of the dew condensation water, the lower limit of the gap g is preferably zero. In order to easily accommodate the second excess portion 6b and the superconducting joint portion 6c in the blind hole 16, the gap g may be 0.01 mm or more, or may be 0.03 mm or more.

Specifically, as shown in FIG. 7, in a cross-section perpendicular to the longitudinal direction of the first hole portion 17, the gap g between the side wall of the first hole portion 17 and the second excess portion 6b of the superconducting wire 3, 4 is, for example, 2 mm or less. From the viewpoint of preventing the entry of the dew condensation water, the lower limit of the gap g is preferably zero. In order to easily accommodate the second excess portion 6b in the first hole portion 17, the gap g may be 0.01 mm or more, or may be 0.03 mm or more. As shown in FIG. 8, in a cross-section perpendicular to the longitudinal direction of the second hole portion 18, the gap g between the side wall of the second hole portion 18 and the second excess portion 6b of the superconducting wire 3, 4 is, for example, 2 mm or less. From the viewpoint of preventing the entry of the dew condensation water, the lower limit of the gap g is preferably zero. In order to easily accommodate the second excess portion 6b in the first hole portion 17, the gap g may be 0.01 mm or more, or may be 0.03 mm or more.

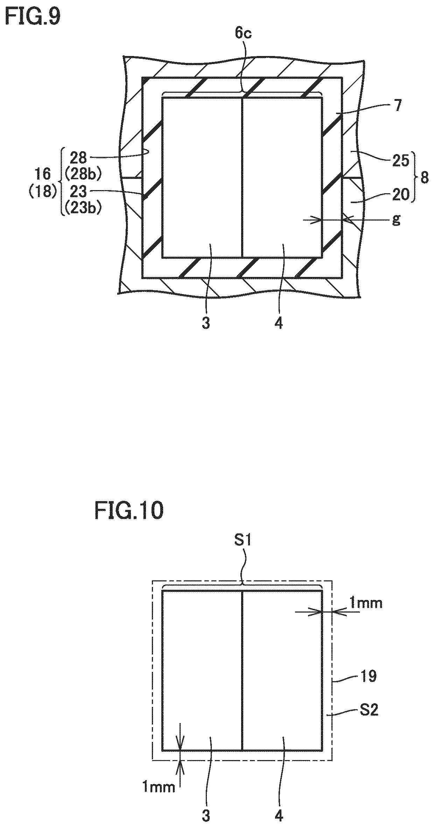

Referring to FIG. 9, in a cross-section perpendicular to the longitudinal direction of the blind hole 16, the gap g between the side wall of the blind hole 16 and the superconducting joint portion 6c of the superconducting wires 3, 4 is, for example, 2 mm or less. Specifically, the gap g between the side wall of the second hole portion 18 and the superconducting joint portion 6c of the superconducting wire 3, 4 is, for example, 2 mm or less. From the viewpoint of preventing the entry of the dew condensation water, the lower limit of the gap g is preferably zero. In order to easily accommodate the superconducting joint portion 6c in the blind hole 16, the gap g may be 0.01 mm or more, or may be 0.03 mm or more.

An area of an opening 16a (see FIG. 2) of the blind hole 16 in the outer circumferential surface 10 of the protective case body 8 may be less than or equal to a sum of a cross-sectional area S1 (see FIG. 10) of the superconducting wires 3, 4 in the cross-section perpendicular to the longitudinal direction of the superconducting wires 3, 4 and an area S2 (see FIG. 10) of an imaginary frame 19 surrounding the superconducting wires 3, 4 and having a width of 1 mm. An area of the opening 16a of the blind hole 16 is an area defined by the opening edge of the blind hole 16 in the outer circumferential surface 10 of the protective case body 8.

The protective case body 8 is made of a material that does not react with a coolant for the superconducting wires 3, 4 and can be used at a low temperature equal to or lower than the critical temperature (Tc) of the superconducting layers 33 and 43 (see FIGS. 5 and 6) of the superconducting wires 3, 4. For example, the protective case body 8 is made of a metal such as Hastelloy, a resin, or a ceramic. Referring to FIGS. 1 to 4 and 7 to 9, the protective case body 8 includes the base member 20 and the cover member 25.

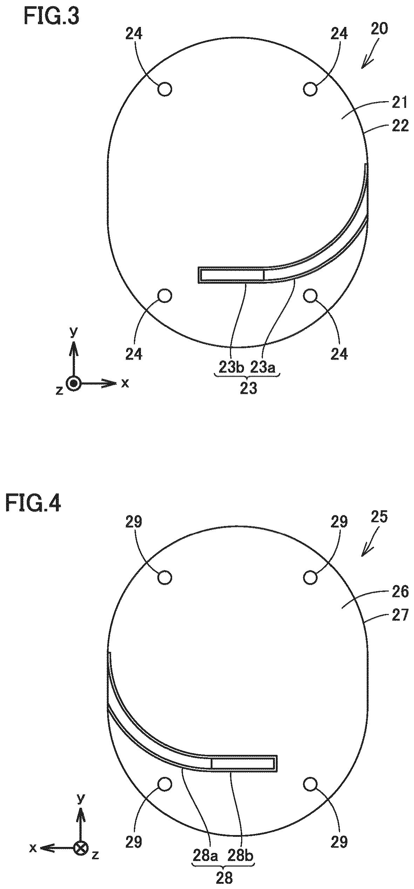

Referring to FIG. 3, the base member 20 includes a main surface 21 and a side surface 22 connected to the main surface 21. A first groove 23 is provided in the main surface 21 of the base member 20. The first groove 23 constitutes a part of the blind hole 16. The first groove 23 includes groove portions 23a and 23b.

The groove portion 23a constitutes a part of the first hole portion 17 and is connected to the side surface 22 of the base member 20. In the plan view in the transverse direction (z direction) of the outer circumferential surface 10 of the protective case body 8, the groove portion 23a has the same shape (for example, a curved shape) as the first hole portion 17. The groove portion 23b is connected to the groove portion 23a and constitutes a part of the second hole portion 18. In the plan view in the transverse direction of the outer circumferential surface 10 of the protective case body 8, the groove portion 23b has the same shape (for example, a straight shape) as the second hole portion 18.

Referring to FIG. 4, the cover member 25 includes a main surface 26 and a side surface 27 connected to the main surface 26. Referring to FIGS. 2 and 4, the cover member 25 is attached to the base member 20 to cover the first groove 23. The main surface 26 of the cover member 25 faces the main surface 21 of the base member 20, and the cover member 25 covers the main surface 21 of the base member 20. The cover member 25 does not cover the side surface 22 of the base member 20. The side surface 22 of the base member 20 is exposed from the cover member 25. A second groove 28 is provided in the main surface 26 of the cover member 25. The second groove 28 constitutes a part of the blind hole 16. The second groove 28 includes groove portions 28a and 28b.

The groove portion 28a constitutes a part of the first hole portion 17 and is connected to the side surface 27 of the cover member 25. In the plan view in the transverse direction (z direction) of the outer circumferential surface 10 of the protective case body 8, the groove portion 28a has the same shape (for example, a curved shape) as the first hole portion 17. The groove portion 28b is connected to the groove portion 28a and constitutes a part of the second hole portion 18. In the plan view in the transverse direction of the outer circumferential surface 10 of the protective case body 8, the groove portion 28b has the same shape (for example, a straight shape) as the second hole portion 18. That is, in a state where the main surfaces 21 and 26 are disposed to face each other, the base member 20 and the cover member 25 have a substantially symmetrical shape with respect to the main surfaces 21 and 26.

The outer circumferential surface 10 of the protective case body 8 is constituted of the side surface 22 of the base member 20 and the side surface 27 of the cover member 25. The blind hole 16 is constituted of the first groove 23 and the second groove 28. The first hole portion 17 is constituted of the groove portion 23a and the groove portion 28a. The second hole portion 18 is constituted of the groove portion 23b and the groove portion 28b.

Referring to FIGS. 1 and 2, the cover member 25 may be fixed to the base member 20 by the fixation member 9. An example of the fixation member 9 is a screw. Specifically, referring to FIG. 3, a screw hole 24 is provided in the main surface 21 of the base member 20. Referring to FIG. 4, a through hole 29 is provided in the main surface 26 of the cover member 25. The screw is screwed into the screw hole 24 of the base member 20 through the through hole 29. Another example of the fixation member 9 is a joining member such as an adhesive. The cover member 25 is joined to the base member 20 via a joining member provided on the main surface 21 of the base member 20.

Referring to FIG. 5, an example of the superconducting joint portion 6c of the superconducting wire 3, 4 will be described. In the superconducting joint portion 6c, the superconducting layer 33 of the superconducting wire 3 and the superconducting layer 43 of the superconducting wire 4 are joined to each other via, for example, a superconducting junction layer 50. The superconducting wire 3 includes, for example, a substrate 31, an intermediate layer 32, the superconducting layer 33, a protective layer 34, and a stabilization layer 35. The superconducting wire 4 includes, for example, a substrate 41, an intermediate layer 42, the superconducting layer 43, a protective layer 44, and a stabilization layer 45.

Each of the substrates 31 and 41 is, for example, a metal substrate. The metal substrate may be, for example, an oriented metal substrate having orientation or a metal substrate having no orientation. The oriented metal substrate means a metal substrate in which the crystal orientations are aligned in the surface of the metal substrate. The oriented metal substrate is a clad type metal substrate in which a nickel layer and a copper layer are disposed on a base metal substrate of SUS or Hastelloy^{®}, for example.

The intermediate layer 32 is disposed on the substrate 31. The intermediate layer 42 is disposed on the substrate 41. Each of the intermediate layers 32 and 42 has a crystalline orientation. Each of the intermediate layers 32 and 42 may be constituted of a plurality of layers.

The intermediate layer 32 is made of a material that has extremely low reactivity with the superconducting layer 33 and does not deteriorate superconducting characteristics of the superconducting layer 33. The intermediate layer 42 is made of a material that has extremely low reactivity with the superconducting layer 43 and does not deteriorate superconducting characteristics of the superconducting layer 43. Each of the intermediate layers 32 and 42 is made of at least one of yttria-stabilized zirconia (YSZ), CeO₂ (cerium oxide), magnesium oxide (MgO), yttrium oxide (Y₂O₃), aluminum oxide (Al₂O₃), lanthanum manganese oxide (LaMnO₃), gadolinium zirconate (Gd₂Zr₂O₇), or strontium titanate (SrTiO₃), for example. Each of the intermediate layers 32 and 42 is formed by, for example, magnetron sputtering method or ion beam assisted deposition (IBAD) method.

The superconducting layer 33 is disposed on the intermediate layer 32. The superconducting layer 33 is a portion of the superconducting wire 3 through which a superconducting current flows. The superconducting layer 43 is disposed on the intermediate layer 42. The superconducting layer 43 is a portion of the superconducting wire 4 through which a superconducting current flows. Each of the superconducting layers 33 and 43 is made of, for example, an oxide superconducting material. Specifically, each of the superconducting layers 33 and 43 is made of RE₁Ba₂Cu₃O_{y} (hereinafter, referred to as "REBCO"). RE is a rare earth element such as yttrium (Y), gadolinium (Gd), dysprosium (Dy), europium (Eu), lanthanum (La), neodymium (Nd), erbium (Er), thulium (Tm), ytterbium (Yb), lutetium (Lu), samarium (Sm) or holmium (Ho). y is 6.0 to 8.0. y may be 6.8 to 7.0. Each of the superconducting layers 33 and 43 is formed by, for example, a metal organic decomposition (MOD) method or a pulsed laser deposition (PLD) method.

The protective layer 34 is disposed on the superconducting layer 33. The protective layer 44 is disposed on the superconducting layer 43. Each of the protective layers 34 and 44 is made of, for example, silver (Ag) or silver alloy. Each of the protective layers 34 and 44 is formed by, for example, a sputtering method.

The stabilization layer 35 is disposed on the protective layer 34. The stabilization layer 45 is disposed on the protective layer 44. Each of the stabilization layers 35 and 45 is made of, for example, copper (Cu) or copper alloy. Each of the stabilization layers 35 and 45 is formed by, for example, a plating method.

The superconducting junction layer 50 joins the superconducting layer 33 and the superconducting layer 43 to each other at an end portion 3e of the superconducting wire 3 and an end portion 4e of the superconducting wire 4. The superconducting junction layer 50 is made of REBCO. The superconducting junction between the superconducting layer 33 and the superconducting layer 43 using the superconducting junction layer 50 is formed by, for example, the following method. A polycrystalline layer including a polycrystal of REBCO is formed on the superconducting layer 33. The superconducting wire 4 is disposed so that the superconducting layer 43 is in contact with the polycrystalline layer. The stack of layers of the end portion 3e of the superconducting wire 3, the polycrystalline layer, and the end portion 4e of the superconducting wire 4 is heated while being pressed. The crystal grains constituting the polycrystalline layer are oriented and grown, and the polycrystalline layer becomes the superconducting junction layer 50. In this manner, the superconducting layer 33 and the superconducting layer 43 are joined to each other via the superconducting junction layer 50.

Referring to FIG. 6, another example of the superconducting joint portion 6c will be described. In the superconducting joint portion 6c, the superconducting layer of the superconducting wire 3, 4 and the superconducting layer of the superconducting wire 3, 4 are joined to each other via, for example, a connecting film 5. The connecting film 5 includes a support member 51, a superconducting layer 52, and the superconducting junction layer 50. In the joining of the superconducting wires 3, 4 with the connecting film 5, as shown in FIG. 6, the superconducting wires 3, 4 are arranged so that the superconducting layer 33 of the superconducting wire 3 and the superconducting layer 43 of the superconducting wire 4 are not opposed to each other but are arranged in parallel to each other.

The support member 51 is made of, for example, silver (Ag) or silver alloy. The support member 51 is made of, for example, a texture in which crystal grains are oriented. This texture is obtained by, for example, performing wire drawing, warm rolling, and heat treatment on a shaped material made of silver or the like.

Each of the superconducting layer 52 and the superconducting junction layer 50 is made of REBCO. The superconducting layer 52 is disposed on the support member 51. The crystal orientation of the superconducting layer 52 reflects the crystal orientation of the outermost surface of the support member 51. The superconducting junction layer 50 is disposed on the superconducting layer 52.

The superconducting junction between the superconducting layer 33 and the superconducting layer 43 using the superconducting junction layer 50 is formed by, for example, the following method. The superconducting layer 52 is formed on the support member 51 by a PLD method or the like. A polycrystalline layer including a polycrystal of REBCO is formed on the superconducting layer 52. The connecting film 5 is disposed so that the polycrystalline layer is in contact with each of the superconducting layers 33 and 43. The stack of layers of the end portion 3e of the superconducting wire 3, the polycrystalline layer, and the end portion 4e of the superconducting wire 4 is heated while being pressed. The crystal grains constituting the polycrystalline layer are oriented and grown, and the polycrystalline layer becomes the superconducting junction layer 50. In this manner, the superconducting layer 33 and the superconducting layer 43 are joined to each other via the connecting film 5 including the superconducting junction layer 50.

Referring to FIGS. 1 and 7 to 9, the sealing member 7 closes at least a part of a gap between the second excess portion 6b of the superconducting wire 3, 4 and the side wall of the blind hole 16 or a gap between the superconducting joint portion 6c of the superconducting wire 3, 4 and the side wall of the blind hole 16. The sealing member 7 may be filled into the entirety of these gap. The sealing member 7 is made of grease such as low-temperature grease (for example, Apiezon N (manufactured by ARAM Corporation)), rubber, clay, or the like.

### (Modification)

In a first modification of the present embodiment, the cover member 25 may not be provided with the second groove 28, and the blind hole 16 may be constituted of the first groove 23 and the main surface 26 of the cover member 25 covering the first groove 23. In a second modification of the present embodiment, the base member 20 and the cover member 25 may be integrated, or the base member 20 and the cover member 25 may be a single member.

The embodiments and modifications thereof disclosed herein are to be considered in all respects as illustrative and not restrictive. The scope of the present disclosure is defined by the terms of the claims, rather than the embodiments described above, and is intended to include any modifications within the scope and meaning equivalent to the terms of the claims.

### REFERENCE SIGNS LIST

1 protective structure for a superconducting joint portion, 2 protective case for a superconducting joint portion, 3, 4 superconducting wire, 3e, 4e end portion, 5 connecting film, 6a first excess portion, 6b second excess portion, 6c superconducting joint portion, 7 sealing member, 8 protective case body, 8c center, 9 fixation member, 10 outer circumferential surface, 11 first flat surface, 12 second flat surface, 13 first curved surface, 14 second curved surface, 16 blind hole, 16a opening, 17 first hole portion, 18 second hole portion, 19 imaginary frame, 20 base member, 21 main surface, 22 side surface, 23 first groove, 23a, 23b groove portion, 24 screw hole, 25 cover member, 26 main surface, 27 side surface, 28 second groove, 28a, 28b groove portion, 29 through hole, 31, 41 substrate, 32, 42 intermediate layer, 33, 43, 52 superconducting layer, 34, 44 protective layer, 35, 45 stabilization layer, 50 superconducting junction layer, 51 support member.

## Claims

1. A protective case for a superconducting joint portion, the protective case comprising:
a protective case body having an outer circumferential surface around which a first excess portion of a superconducting wire is wound,
wherein the outer circumferential surface has a blind hole that accommodates a superconducting joint portion of the superconducting wire and a second excess portion of the superconducting wire, the second excess portion being connected to the first excess portion and the superconducting joint portion.

2. The protective case for a superconducting joint portion according to claim 1,
wherein the blind hole includes a first hole portion and a second hole portion, the first hole portion being connected to the outer circumferential surface, the first hole portion accommodating the second excess portion, the second hole portion being connected to the first hole portion, the second hole portion defining a bottom of the blind hole, the second hole portion accommodating the superconducting joint portion, and
wherein the first hole portion has a curved shape.

3. The protective case for a superconducting joint portion according to claim 2,
wherein the second hole portion has a straight shape.

4. The protective case for a superconducting joint portion according to claim 2 or claim 3,
wherein the outer circumferential surface includes a curved surface having a protruding shape in a plan view in a transverse direction of the outer circumferential surface, and
wherein a radius of curvature of the curved surface is larger than a radius of curvature of the first hole portion.

5. The protective case for a superconducting joint portion according to claim 2 or claim 3,
wherein a radius of curvature of the first hole portion is 15 mm or more.

6. The protective case for a superconducting joint portion according to claim 2 or claim 3,
wherein, in a plan view in a transverse direction of the outer circumferential surface, the protective case body has an oval shape, the first hole portion is provided in a portion of the outer circumferential surface located in a transverse direction of the protective case body with respect to a center of the protective case body, and the second hole portion extends in the transverse direction of the protective case body and is displaced in a longitudinal direction of the protective case body with respect to the center of the protective case body.

7. The protective case for a superconducting joint portion according to any one of claim 1 to claim 6,
wherein the protective case body includes a base member and a cover member,
wherein the base member has a first groove constituting at least part of the blind hole, and
wherein the cover member is attached to the base member to cover the first groove.

8. The protective case for a superconducting joint portion according to claim 7,
wherein the cover member has a second groove, and
wherein the first groove and the second groove constitute the blind hole.

9. The protective case for a superconducting joint portion according to claim 7 or claim 8, the protective case further comprising:
a fixation member,
wherein the cover member is fixed to the base member by the fixation member.

10. The protective case for a superconducting joint portion according to any one of claim 1 to claim 9,
wherein the protective case body is made of Hastelloy.

11. A protective structure for a superconducting joint portion, the protective structure comprising:
the protective case for a superconducting joint portion according to any one of claim 1 to claim 10;
the superconducting wire including the first excess portion and the second excess portion; and
the superconducting joint portion,
wherein the first excess portion of the superconducting wire is wound along the outer circumferential surface, and
wherein the superconducting joint portion of the superconducting wire and the second excess portion of the superconducting wire are accommodated in the blind hole.

12. The protective structure for a superconducting joint portion according to claim 11,
wherein, in a cross-section perpendicular to a longitudinal direction of the blind hole, a gap between a side wall of the blind hole and the second excess portion of the superconducting wire is 2 mm or less.

13. The protective structure for a superconducting joint portion according to claim 11 or claim 12,
wherein an area of an opening of the blind hole in the outer circumferential surface is less than or equal to a sum of a cross-sectional area of the superconducting wire in a cross-section perpendicular to a longitudinal direction of the superconducting wire and an area of an imaginary frame surrounding the superconducting wire and having a width of 1 mm.

14. The protective structure for a superconducting joint portion according to claim 11, the protective structure further comprising:
a sealing member that closes at least part of a gap between the second excess portion of the superconducting wire and a side wall of the blind hole or a gap between the superconducting joint portion of the superconducting wire and the side wall of the blind hole.
